# EUROPÄISCHE PATENTSCHRIFT

(11) **EP 0 479 302 B1**
(45) Veröffentlichungstag und Bekanntmachung des Hinweises auf die Patenterteilung: **01.06.1994**
(21) Anmeldenummer: 91116920.9
(22) Anmeldetag: 04.10.1991
(51) Int. Cl.: F16K 7/10, F16L 55/12, E03F 7/02

(54) **Absperrvorrichtung zum Verschliessen von Durchflusslöchern**
Closure device for sealing flow-passages
Organe d'arrêt pour fermer une ouverture utile

(30) Priorität: 05.10.1990 DE 4031595
(43) Veröffentlichungstag der Anmeldung: 08.04.1992
(73) Patentinhaber: SION, Karl, D-52080 Aachen (DE); WIRTZ, Dieter, D-52080 Aachen (DE)
(72) Erfinder: SION, Karl, D-52080 Aachen (DE); WIRTZ, Dieter, D-52080 Aachen (DE)
(74) Vertreter: von Creytz, Dietrich, Dipl.-Phys.

(56) Entgegenhaltungen:
- EP-A- 0 270 367
- WO-A-90/00652
- DE-A- 3 810 515
- DE-C- 504 392
- FR-A- 2 617 572
- GB-A- 2 140 894

## Beschreibung

Die Erfindung betrifft eine Absperrvorrichtung zum Verschließen von Durchflußlöchern, wie Lecks, Abfluß- bzw. Zuflußkanälen, Rohren oder dergleichen, mit einem zum Absperren in das jeweilige Durchflußloch einzusetzenden und dann zu expandierenden elastischen Aufblaskörper.

Zum schnellen und sicheren Absperren von Straßeneinläufen und Kanalrohren auf Straßen oder in Fabrikgeländen bei Unglücksfällen sind Aufblaskörper, z.B. aus der DE-PS 504 392, bekannt, die beim Einsatz an eine außerhalb der Vorrichtung befindliche Druckluftquelle anzuschließen sind. In der FR-PS 26 17 572 wird ein solcher Aufblaskörper angegeben, der den erforderlichen Druckgasvorrat in der Flasche bereits im entspannten Zustand umschließt. Schließlich wird in der internationalen Patentanmeldung PCT/DE 89/00447 (veröffentlicht am 25. Januar 1990) ein elastischer Aufblaskörper mit Tragegriff vorgeschlagen, dessen integrierter Druckgasbehälter einhändig dosiert von dem Tragegriff aus zu betätigen ist.

Wenn eine der bekannten Absperrvorrichtungen in ein Durchflußloch mit gerundeter, insbesondere zylindrischer, Innenfläche gesetzt wird, ergeben sich in der Praxis hervorragende Absperreffekte. Probleme können jedoch auftreten, wenn das Durchflußloch einen vom Kreis stark abweichenden Querschnitt mit Ecken und Kanten, z.B. einen Rechteckquerschnitt, aufweist oder wenn in das Durchflußloch Vorsprünge oder Spitzen ragen. Es ergibt sich dann eine häufig nur unvollkommene Abdichtung, es kann sogar vorkommen, daß die elastische Wandung des Aufblaskörpers beschädigt wird und platzt.

Der Erfindung liegt die Aufgabe zugrunde, die eingangs genannte Absperrvorrichtung so zu verbessern, daß beliebig geformte Durchflußlöcher eines gewissen Größenbereichs mit ein und demselben Aufblaskörper auch in Katastrophenfällen in wenigen Augenblicken - zumindest im Ersteinsatz - nachhaltig abzudichten sind. Die erfindungsgemäße Lösung ist gekennzeichnet durch einen in das jeweilige Durchflußloch einzusetzenden und einen Durchgang zum Einschieben des entspannten Aufblaskörpers aufweisenden Ausgleichsrahmen aus einem unter Flächendruck des expandierenden Aufblaskörpers an die Innenfläche des Durchflußlochs dicht anzuschließenden Material.

Der erfindungsgemäß zu der Absperrvorrichtung gehörende Ausgleichsrahmen soll aus einem Material bestehen, das unter Druck betreffend Form und Volumen stark veränderbar ist, ohne seinen Zusammenhalt zu verlieren. Wenn also erfindungsgemäß ein Durchflußloch abzudichten ist, wird in das Durchflußloch zunächst der Ausgleichsrahmen gesetzt. Dieser überdeckt Unebenheiten oder Ecken der Innenfläche des Durchflußlochs und wird nach dem Einsetzen des Aufblaskörpers in seinen Durchgang sowie nach dem Expandieren des Aufblaskörpers flächig überall an die Innenseite des abzusperrenden Durchflußlochs angepreßt. Auf diese Weise werden auch radial nach innen vorspringende Spitzen des Durchflußlochs gewissermaßen im Ausgleichsrahmen "verschluckt", radial nach außen vorspringende Ecken werden mit dem verformbaren Material des Ausgleichsrahmens dicht ausgefüllt. Mit Hilfe des erfindungsgemäßen Ausgleichsrahmens werden also sowohl eine Gefährdung des Aufblaskörpers durch vorspringende Kanten als auch eine unvollständige Abdichtung des Durchflußlochs an radial nach außen vorspringenden Kanten vermieden.

Gemäß Vorstehendem wird der erfindungsgemäße Ausgleichsrahmen vorzugsweise als Ring mit der Innenfläche des abzusperrenden Durchflußlochs in etwa angepaßter Umfangsfläche ausgebildet. Wenn beispielsweise diese Umfangsfläche rechteckig ist, soll auch die Umfangsfläche des Ausgleichsrahmens in etwa rechteckig sein. Solche außen rechteckigen Ausgleichsrahmen mit im wesentlichen zylindrischem Durchgang werden beispielsweise dort gebraucht, wo Straßenkanaleinlässe einen rechteckigen Innenquerschnitt besitzen.

Um das Einsetzen des Ausgleichsrahmens in das jeweilige Durchflußloch zu erleichtern - in Katastrophenfällen steht nur wenig Zeit für ein genaues Austarieren zur Verfügung - ist es gemäß weiterer Erfindung vorteilhaft, wenn der Ausgleichsrahmen eine außen auf dem Umfangsrand des jeweilig zu verschließenden Durchflußlochs aufzulegenden Flansch besitzt. Das Einlegen bzw. Einschieben des Ausgleichsrahmens in ein Durchflußloch wird auch erleichtert, wenn die an die Innenwand des Durchflußlochs anzulegende Umfangsfläche des Ausgleichsrahmens zumindest abschnittsweise in der Schubrichtung, also axial, konisch ausgebildet ist. Zumindest die Kante des Ausgleichsrahmens, die zuerst in das Durchflußloch einzuschieben ist, sollte konisch sein.

Für verschiedene Unglücksfälle werden bei der jeweiligen Hilfsstelle, insbesondere der Feuerwehr, Ausgleichsrahmen verschiedener Formen und Größen bereitgestellt. Da jeder einzelne Ausgleichsrahmen aus einem erheblich dehnbaren bzw. zusammenpreßbaren Material besteht, muß der jeweilige Ausgleichsrahmen nicht genau in das zu verschließende Durchflußloch passen. Für die Bevorratung genügen daher Ausgleichsrahmen, die sich betreffend den Außenumfang und die Außenform in größeren Stufen unterscheiden.

Eine Lagerung mit besonders geringem Gesamtvolumen für mehrere Ausgleichsrahmen ist gemäß noch weiterer Erfindung möglich, wenn die Ausgleichsrahmen wie konzentrische Ringe ineinander steckbar sind. Die Ringe können dabei selbstverständlich außer der Kreis- bzw. Zylinderform auch andere Umfangsformen, insbesondere Rechteckform, besitzen. Der zum Einsetzen des Aufblaskörpers vorgesehene Durchgang des einzelnen Ausgleichsrahmens soll jedoch zumindest nach dem Expandieren des eingesetzten Aufblaskörpers annähernd runde Formen besitzen, so daß beim Aufblasen der Durchgang auch bei unregelmäßiger Form des zu verschließenden Durchflußlochs - etwa bei einem in ein Schiff geschlagenen Leck - vollständig und dichtend von dem expandierten Aufblaskörper auszufüllen ist.

Der beschriebene Ausgleichsrahmen wird in der Regel einteilig hergestellt, weil dann seine Handhabung am einfachsten ist. Es liegt aber auch im Rahmen der Erfindung, einen zwei- oder mehrteiligen Ausgleichsrahmen vorzusehen. Das gilt insbesondere dann, wenn jedes der Einzelteile an der der Wandung des Durchflußlochs zuzuwendenden Fläche mit mindestens einer Magnetfläche ausgestattet wird und wenn die dem Aufblaskörper zuzuwendende Fläche jedes Einzelteils gerundet ist. Gegebenenfalls wird beispielsweise in die vier Ecken eines rechteckigen Durchflußlochs, dessen Wandung aus Eisen besteht, je eines der Einzelteile so gesetzt, daß es die Ecke ausfüllt und zur Innenseite des Lochs gerundet ist. Um eine solche Kanalauskleidung mit einem aus mehreren Einzelteilen bestehenden Ausgleichsrahmen im Notfall schnell und möglichst von einer einzigen Person montieren zu können, ist es sehr vorteilhaft, wenn die Einzelteile durch Magnetkräfte an der Wand des abzudichtenden Durchflußlochs haften. Wegen der vorausgesetzten starken Dehnbarkeit und Zusammenpreßbarkeit des Materials des Ausgleichsrahmens können sich die Einzelteile an der verkleideten Innenwand des Durchflußlochs auch überlappen. Das weiche Material des Ausgleichsrahmens stellt nämlich eine Gefahr für die Haltbarkeit des Aufblaskörpers nicht dar. Etwaige Unebenheiten bzw. Stufen werden vielmehr beim Expandieren des Aufblaskörpers so zusammengequetscht, daß das Durchflußloch schließlich sicher abgedichtet wird.

Der erfindungsgemäße Ausgleichsrahmen soll - wie gesagt - aus einem zusammenhängenden Material bestehen, das im ganzen Volumen so stark dehnbar und zusammenpreßbar ist, daß es beim Expandieren eines eingeschobenen Aufblaskörpers auf der Innenfläche des zu verschließenden Durchflußlochs vorgesehene Kerben ausfüllen bzw. Vorsprünge umschließen (verschlucken) kann. Hiernach geeignet sind beispielsweise geschäumtes Gummi, aus Kunststoff bestehender, insbesondere geschlossenporiger, Schaumstoff und dergleichen. Die Materialien können elastisch oder unelastisch sein. Insbesondere, wenn der Ausgleichsrahmen aus einem im Volumen ausreichend elastischen Material besteht, kann er mehrmals für denselben Zweck eingesetzt werden. Geschlossenporiges Material wird bevorzugt, wenn ein schwammartiges Aufsaugen der durch die Absperrvorrichtung zuzurückzuhaltenden Substanz - beim Entspannen - vermieden werden soll.

Anhand der schematischen Darstellung von Ausführungsbeispielen werden Einzelheiten der Erfindung erläutert. Es zeigen:
- Fig. 1: eine Draufsicht auf drei konzentrisch ineinander gesteckte Ausgleichsrahmen;
- Fig. 2: einen Querschnitt längs der Linie II-II von Fig. 1;
- Fig. 3: eine Draufsicht auf einen außen rechteckigen und innen runden Ausgleichsrahmen;
- Fig. 4: eine Draufsicht auf einen aus vier Einzelteilen bestehenden Ausgleichsrahmen;
- Fig. 5: eine perspektivische Darstellung eines der Einzelteile nach Fig. 4; und
- Fig. 6: eine perspektivische Darstellung mit einem zu versperrenden, rechteckigen Durchflußloch, in das vor dem Einschieben des zu expandierenden Aufblaskörpers ein außen rechteckiger und innen runder Ausgleichsrahmen eingesetzt wurde.

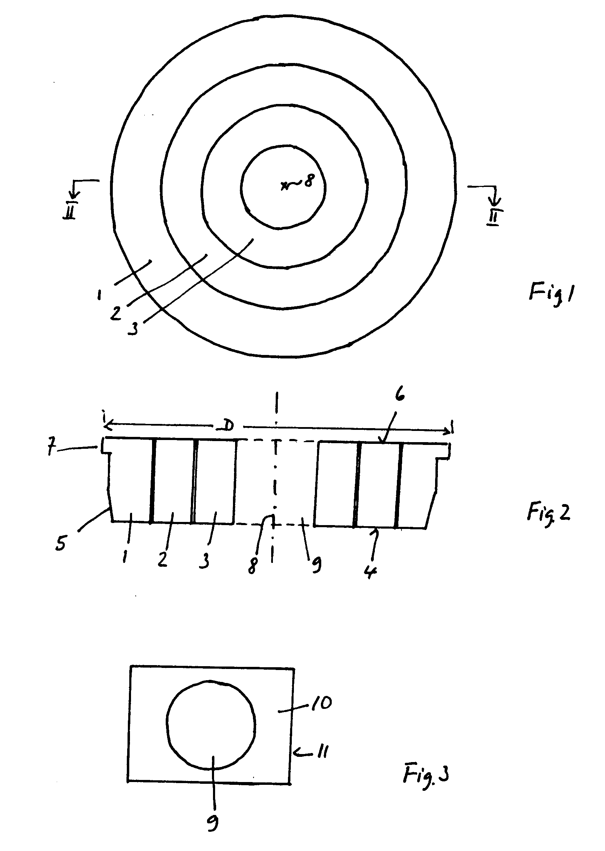

Die Fig. 1 und 2 zeigen drei konzentrisch ineinander gesteckte Ausgleichsrahmen 1, 2, 3, deren Außendurchmesser, z.B. D, in etwa der lichten Weite des jeweils abzusperrenden Durchflußlochs entspricht. Durch Bereitstellung mehrerer solcher Ausgleichsrahmen 1 bis 3 wird erreicht, daß die helfende Stelle, z.B. Feuerwehr, für die in ihrem Aktionsbereich vorkommenden Kanäle und dergleichen die jeweils passenden Ausgleichsrahmen bereithalten kann. Um jedoch im Hilfsfahrzeug Raum zu sparen, können die einzelnen Ausgleichsrahmen so abgestuft ausgebildet werden, daß sie konzentrisch ineinander passen.

Das Einsetzen eines Ausgleichsrahmens in ein zu verschließendes Durchflußloch, wird erleichtert, wenn der Ausgleichsrahmen an der in das Durchflußloch einzufügenden Unterseite 4 zumindest zum Teil konisch ist, also beispielsweise eine Fase 5 besitzt. Um ferner einen definierten Sitz des jeweiligen Ausgleichsrahmens 1 in einem zu verschließenden Durchflußloch zu erreichen, kann es vorteilhaft sein, an der der Unterseite 4 gegenüberliegenden Oberseite 6 des Ausgleichsrahmens 1 einen Flansch 7 außen anzuformen, der bei Anwendung außen auf dem äußeren Rand des jeweils zu verschließenden Durchflußlochs liegen soll.

In Fig. 1 und 2 wird vorgesehen, daß die einzelnen Ausgleichsrahmen 1 bis 3 in Bezug auf eine gemeinsame Achse 8 konzentrisch ineinander gesteckt sind. In dieser Beziehung liegen vielfältige Abwandlungen im Rahmen der Erfindung. Beispielsweise müssen die Ausgleichsrahmen 1 bis 3 nicht kreisförmig bzw. zylindrisch sein, sie können vielmehr auch eine andere, insbesonder ovale, Form haben. Bei Anwendung kann es günstig sein, außen beginnend, so viele Ringe wegzunehmen, daß der Durchmesser D des verbleibenden äußersten Rings gerade in das zu verschließende Durchflußloch paßt. Wenn dann die diesbezüglich innenliegenden Ringe mit in das Durchflußloch gesteckt werden, ist der dem jeweiligen Aufblaskörper zugeordnete Durchgang 9 des Ausgleichsrahmens unabhängig von der Größe des zu verschließenden Durchflußlochs immer - zumindest vor dem Expandieren des Aufblaskörpers - gleich groß.

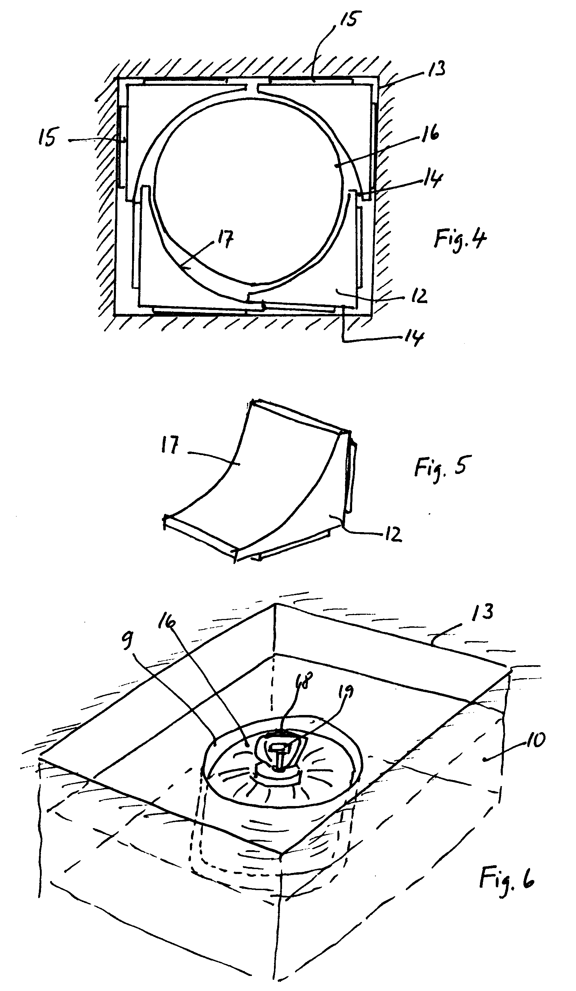

Fig. 3 zeigt einen erfindungsgemäßen Ausgleichsrahmen 10 mit zylindrischem Durchgang 9 zum Einsetzen des Aufblaskörpers und mit rechteckiger Umfangslinie 11. Ein solcher Ausgleichsrahmen 10 wird beispielsweise in Kanäle oder sonstige Löcher mit rechteckiger Innenwandung eingesetzt. Wenn ein solcher Kanal aus Eisen bestehende oder Eisen enthaltende Wände besitzt, läßt sich mit Vorteil auch ein mehrteiliger Ausgleichsrahmen nach Fig. 4 und 5 verwenden. Der in Fig. 4 in der Draufsicht dargestellte mehrteilige Ausgleichsrahmen besitzt vier Einzelteile 12, die auf ihrer einem rechteckigen Durchflußloch 13 zuzuwendenden Außenfläche 14 mit Magneten 15, insbesondere elastischen Magnetfolien, beklebt sind. Jedes in Fig. 5 vergrößert, perspektivisch dargestellte Einzelteil 12 besitzt an seiner einem einzusetzenden Aufblaskörper 16 zugewandten Innenfläche 17 eine gerundete Form, die vorteilhaft zumindest annähernd einen Teil einer Zylinderfläche ausmacht. Wenn die Einzelteile 12 der einen oder anderen Richtung so lang sein sollten, daß sie sich beim Einsetzen in das Durchflußloch in einer Überlapp-Position 14 in der gezeigten Weise teilweise überdecken, ergeben sich daraus beim Abdichten durch Expandieren des Aufblaskörpers 16 im allgemeinen keine Probleme, da das Material jedes Einzelteils 12 so dehnbar bzw. im Volumen zusammendrückbar sein soll, daß sogar Unebenheiten in der Innenfläche des Durchflußlochs 13 ausgeglichen werden können.

Fig. 6 zeigt in perspektivischer Ansicht ein Durchflußloch 13 mit darin eingesetztem außen rechteckigen Ausgleichsrahmen 10 nach Fig. 3, in dessen innerem, etwa zylindrischem Durchgang 9 ein Aufblaskörper 16 mit Handgriff 18 und Betätigungsknopf bzw. Druckluftanschluß 19 eingeschoben ist.

## Patentansprüche

1. Absperrvorrichtung zum Verschließen von Durchflußlöchern (13), wie Lecks, Abfluß- bzw. Zuflußkanälen, Rohren oder dergleichen, mit einem zum Absperren in das jeweilige Durchflußloch (13) einzusetzenden und dann zu expandierenden elastischen Aufblaskörper (16),
**gekennzeichnet durch**
einen in das jeweilige Durchflußloch (13) einzusetzenden und einen Durchgang (9) zum Einschieben des entspannten Aufblaskörpers (16) aufweisenden Ausgleichsrahmen (1, 2, 3, 10, 12) aus einem unter Flächendruck des expandierenden Aufblaskörpers an die Innenfläche des Durchflußlochs (13) dicht anzuschließenden Material.

2. Absperrvorrichtung nach Anspruch 1,
**dadurch gekennzeichnet,**
daß der Ausgleichsrahmen (1, 2, 3, 10) als Ring mit der Innenfläche des abzusperrenden Durchflußlochs (13) in etwa angepaßter Umfangsfläche ausgebildet ist.

3. Absperrvorrichtung nach Anspruch 2,
**dadurch gekennzeichnet,**
daß die Umfangsfläche (11) des Ausgleichsrahmens (10) in etwa rechteckig, insbesondere angepaßt an entsprechende Straßenkanaleinlässe, ausgebildet ist.

4. Absperrvorrichtung nach einem oder mehreren der Ansprüche 1 bis 3,
**dadurch gekennzeichnet,**
daß der Ausgleichsrahmen (1) einen außen auf dem Umfangsrand des jeweiligen Durchflußlochs (13) aufzulegenden Flansch (7) besitzt.

5. Absperrvorrichtung nach einem oder mehreren der Ansprüche 1 bis 4,
**dadurch gekennzeichnet,**
daß die an die Innenwand des Durchflußlochs (13) anzulegende Umfangsfläche des Ausgleichsrahmens (1) axial zumindest abschnittsweise konisch, insbesondere mit einer Fase (5), ist.

6. Absperrvorrichtung nach einem oder mehreren der Ansprüche 1 bis 5,
**dadurch gekennzeichnet,**
daß mindestens zwei Ausgleichsrahmen (1 bis 3) für die Lagerung wie konzentrische Ringe ineinander steckbar ausgebildet sind.

7. Absperrvorrichtung nach Anspruch 1,
**dadurch gekennzeichnet,**
daß der Ausgleichsrahmen aus mindestens zwei Einzelteilen (12) besteht, daß jedes Einzelteil (12) an der der Wandung des Durchflußlochs (13) zuzuwendenden Außenfläche (14) mit mindestens einer Magnetfläche (15) ausgestattet ist und daß die dem Aufblaskörper (16) zuzuwendende Innenfläche (17) jedes Einzelteils (12) gerundet ist.

8. Absperrvorrichtung nach Anspruch 7,
**dadurch gekennzeichnet,**
daß vier Einzelteile (12) für die vier Eckbereiche eines rechteckigen Durchflußlochs (13) vorgesehen sind.

9. Absperrvorrichtung nach einem oder mehreren der Ansprüche 1 bis 8,
**dadurch gekennzeichnet,**
daß der Ausgleichsrahmen (1, 2, 3, 10, 12) aus einem geschlossenporigen Material besteht.

## Claims

1. A shut-off device for occluding throughflow apertures (13) such as weep holes, discharge and supply passages, pipes or the like, with a flexible inflatable body (16) adapted for insertion into the respective throughflow aperture (13) and then to expand in order to occlude it, characterised by a compensating frame (1, 2, 3, 10, 12) adapted to be inserted into the appropriate throughflow aperture (13) and comprising a passage (9) for insertion of the relaxed inflatable body (16) and consisting of a material adapted to bear tightly against the interior surface of the throughflow aperture (13) under the surface pressure of the inflatable body which is to expand.

2. A shut-off device according to claim 1, characterised in that the compensating frame (1, 2, 3, 10) is constructed as a ring having a peripheral surface substantially adapted to the interior surface of the throughflow aperture (13) which is to be occluded.

3. A shut-off device according to claim 2, characterised in that the peripheral surface (13) of the compensating frame (10) is substantially rectangular in construction and is in particular adapted to corresponding road sewer inlets.

4. A shut-off device according to one or more of claims 1 to 3, characterised in that the compensating frame (1) has a flange (7) adapted to be applied to the outside of the peripheral edge of the relevant throughflow aperture (13).

5. A shut-off device according to one or more of claims 1 to 4, characterised in that the peripheral surface of the compensating frame (1) which is to be applied against the inside wall of the throughflow aperture (13) is axially at least conical in parts, particularly with a chamfer (5).

6. A shut-off device according to one or more of claims 1 to 5, characterised in that at least two compensating frames (1 to 3) are constructed in such a way that they can be fitted into each other like concentric rings for mounting purposes.

7. A shut-off device according to claim 1, characterised in that the compensating frame consists of at least two individual parts (12) and in that each individual part (12) has its outer surface (14) which is adapted to face the wall of the throughflow aperture (13) fitted with at least one magnetic surface (15) and in that the interior surface (17) of each individual part (12) which is adapted to face the inflatable body (16) is rounded.

8. A shut-off device according to claim 7, characterised in that four individual parts (12) are provided for the four corner portions of a rectangular throughflow aperture (13).

9. A shut-off device according to one or more of claims 1 to 8, characterised in that the compensating space (1, 2, 3, 10, 12) consists of a closed-pore material.

## Revendications

1. Dispositif d'obturation servant à fermer des trous de passage (13), par exemple des canaux de fuite, d'évacuation ou d'amenée, des tubes ou similaires, comprenant un corps gonflable (16) à introduire dans le trou de passage correspondant (13) et à dilater ensuite pour réaliser l'obturation, caractérisé par un cadre d'équilibrage (1, 2, 3, 10, 12) à introduire dans le trou de passage correspondant (13), et par un orifice permettant d'insérer le corps gonflable (16) non gonflé, composé d'une matière s'appliquant de façon étanche, sous l'effet de la pression superficielle du corps gonflable qui se dilate, sur la surface intérieure du trou de passage (13).

2. Dispositif d'obturation selon la revendication 1, caractérisé en ce que le cadre d'équilibrage (1, 2, 3, 10) est réalisé sous forme de bague dont la surface périphérique est à peu près adaptée à la surface intérieure du trou de passage (13) à obturer.

3. Dispositif d'obturation selon la revendication 2, caractérisé en ce que la surface périphérique (11) du cadre d'équilibrage (10) est réalisée de façon à peu près rectangulaire, en particulier adaptée à des orifices correspondants de bouches d'égouts.

4. Dispositif d'obturation selon l'une ou plusieurs des revendications 1 à 3, caractérisé en ce que le cadre d'équilibrage (1) possède une bride extérieure (7) à poser sur le bord périphérique du trou de passage correspondant (13).

5. Dispositif d'obturation selon une ou plusieurs des revendications 1 à 4, caractérisé en ce que la surface périphérique du cadre d'équilibrage (1) à poser sur la paroi intérieure du trou de passage (13) est axialement au moins en partie conique, et en ce qu'elle comprend en particulier un chanfrein (5).

6. Dispositif d'obturation selon une ou plusieurs des revendications 1 à 5, caractérisé en ce qu'au moins deux cadres d'équilibrage (1 à 3) sont réalisés de façon à pouvoir être enfoncés l'un dans l'autre en une disposition sous forme de bagues concentriques.

7. Dispositif d'obturation selon la revendication 1, caractérisé en ce que le cadre d'équilibrage se compose d'au moins deux éléments individuels (12), en ce que chaque élément individuel (12) est équipé d'au moins une surface magnétique (15) sur la surface extérieure (14) à orienter vers la paroi du trou de passage (13), et en ce que la surface intérieure (17), à orienter vers le corps gonflable (16), de chaque élément individuel (12) est arrondie.

8. Dispositif d'obturation selon la revendication 7, caractérisé en ce que quatre éléments individuels (12) sont prévus pour les quatre zones de coins d'un trou de passage rectangulaire (13).

9. Dispositif d'obturation selon une ou plusieurs des revendications 1 à 8, caractérisé en ce que le cadre d'équilibrage (1, 2, 3, 10, 12) se compose d'une matière à pores fermés.
